# FASCICULE DE BREVET EUROPEEN

(11) **EP 0 480 840 B1**
(45) Date de publication et mention de la délivrance du brevet: **22.04.1998**
(21) Numéro de dépôt: 91402714.9
(22) Date de dépôt: 11.10.1991
(51) Int. Cl.: B01D 53/06

(54) **Procédé et équipement de séparation par adsorption d'au moins un constituant d'un mélange gazeux**
Verfahren und Vorrichtung zur Abtrennung durch Adsorption von mindestens einem Bestandteil einer Gasmischung
Process and device for separating by adsorption at least one constituent of a gas mixture

(30) Priorité: 11.10.1990 FR 9012538
(43) Date de publication de la demande: 15.04.1992
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Boudet, Michel, F-77240 Vert Saint Denis (FR); Scudier, Jean-Marc, F-78170 La Celle Saint Cloud (FR); Vigor, Xavier, F-78220 Viroflay (FR)
(74) Mandataire: Le Moenner, Gabriel

(56) Documents cités:
- US-A- 1 590 266
- US-A- 3 504 483

## Description

La présente invention concerne les procédés de séparation par adsorption d'au moins un constituant d'un mélange gazeux, du genre où ledit mélange gazeux circule dans une masse d'adsorbant d'une pluralité de masses d'adsorbant lors d'un cycle d'adsorption comprenant au moins une phase d'adsorption jusqu'à une pression haute de cycle et une phase de désorption jusqu'à une pression basse de cycle, la pression haute de cycle étant au moins le double de la pression basse de cycle.

Dans les applications industrielles connues à ce jour, les différentes masses d'adsorbant sont placées dans une pluralité de bidons, avec ou sans capacité auxiliaire suivant le cycle de pression.

L'avantage de ces procédés à variation de pression, dits PSA, est qu'ils présentent un bon rendement, donc une faible consommation d'énergie. Par contre, la productivité (Nm³/h de gaz produit par m³ d'adsorbant) reste faible, actuellement aux alentours de 15 en production d'oxygène par séparation d'air.

Pour réaliser un cycle performant (en terme d'énergie de séparation et de rendement), il faut le plus grand nombre possible de bidons (adsorbeurs) afin de réaliser un cycle complexe, mais dans ce cas, l'investissement devient alors très élevé. Actuellement le compromis se situe entre deux et trois adsorbeurs en production d'oxygène par séparation d'air.

Une réalisation industrielle met donc en oeuvre au moins deux adsorbeurs et généralement trois adsorbeurs pour avoir un fonctionnement le plus continu possible des machines tournantes (compresseur, pompe à vide le cas échéant) avec des tuyauteries, des vannes, dont certaines doivent être régulées, et un automate pour réaliser le cycle. Mais l'investissement de telles unités est coûteux, notamment en raison du coût du matériau adsorbant dont de grandes quantités s'avèrent nécessaires.

Pour réduire l'investissement, une solution consiste à réduire la durée de cycle pour faire travailler plus souvent l'adsorbant (et donc diminuer proportionnellement sa quantité). Mais il se pose alors différents problèmes, d'une part en ce qui concerne le fonctionnement de vannes qui sont sollicitées plus souvent, ce qui accuse leur usure et qui doivent avoir des durées d'ouverture/fermeture très brèves, ce qui accroît leur prix, d'autre part en ce qui concerne la vitesse d'attrition et les pertes de charge supplémentaires, de sorte qu'il faut augmenter la surface de passage et réduire la hauteur du lit, ce qui conduit à des adsorbeurs complexe et coûteux, enfin en ce qui concerne le maintien des performances, car la cinétique d'adsorption devient pénalisante dans les étapes à courte durée et pour s en affranchir, il faut réduire la granulométrie, ce qui conduit à aggraver les problèmes précédemment évoqués.

Actuellement, à notre connaissance, les installations industrielles de ce type ne descendent pas en dessous d'une durée de cycle de 2 x 45 secondes avec des unités à deux adsorbeurs, pour des installations industrielles de capacité significative, telle par exemple une production d'oxygène supérieure à 5 tonnes/jour.

Pour pallier ces inconvénients, un certain nombre de solutions ont été proposées, mais n'ont jamais permis jusqu'ici de fabriquer des installations de taille industrielle.

Il s'agit notamment des installations mettant en oeuvre des procédés à variation rapide de pression ou des procédés appelés 〈〈 Pompage Paramétrique 〉〉. Ils utilisent des cycles très courts (moins de 1 seconde à quelques secondes) sur des lits à fine granulométrie qui doivent avoir une perte de charge importante. La séparation de l'oxygène de l'air en particulier est réalisée par des ondes de pression. Ce procédé permet d'atteindre des productivités supérieures à 100 Nm³/m³ mais il est extrêmement coûteux en énergie et de faible rendement. De plus, les phénomènes d'attrition de l'adsorbant deviennent très préoccupants et, en outre, il faut des vannes commutant parfois au 1/10ème de seconde.

Il existe des vannes ou distributeurs rotatifs alimentant des adsorbeurs disposés en cercle ou un adsorbeur cylindrique séparé en secteurs afin de diminuer le nombre de vannes, de tuyaux et de se rapprocher d'un procédé plus ou moins continu, mais la circulation du gaz se fait généralement longitudinalement dans l'adsorbeur. Les durées de cycle sont longues et les cycles ainsi réalisés sont rudimentaires car mettant en oeuvre la technologie du distributeur tournant et, en outre sont peu performants. La productivité reste comparable aux procédés classiques.

On connait également un adsorbeur rotatif fonctionnant souvent en discontinu, divisé en secteurs toujours avec circulation longitudinale du gaz. La quantité et la qualité de tamis adsorbant à mettre au centre pour une taille industrielle sont incompatibles avec la technologie rotative. On a déjà proposé dans le document PCT-A-WO 86/06056 un système de production d'ozone, où l'on procède à une séparation par adsorption sélective de l'ozone d'un mélange oxygène-ozone et l'on décrit un schéma de réalisation du type à compartiments sectoriels adsorbants agencés rotatifs autour d'un axe vertical avec circulation horizontale du gaz, mais une telle réalisation sous-entend une mise au point significative si l'on entend mettre en oeuvre des procédés avec des variations importante de pression entre les pressions haute et basse du cycle, et/ou des cycles nettement plus élaborés.

Le document US-A-1 590 266 décrit un dispositif à compartiments sectoriels adsorbants agencés rotatifs autour d'un axe vertical pour la mise en oeuvre d'un procédé de séparation par adsorption à variation de température, dit TSA, à durée de cycle très longue et vitesse de rotation lente.

L'objectif de la présente invention est de réunir les avantages des solutions proposées en adsorption avec variation de pression en écartant leurs inconvénients, à savoir une haute productivité avec de hautes performances et un faible investissement tout en proposant une réalisation industrielle fiable.

Ces objectifs de l'invention sont atteints dans un procédé où on agence un adsorbant ayant une granulométrie inférieure à 1,7 mm en une pluralité de masses sectorielles angulairement réparties autour d'un axe et en nombre supérieur au déroulement en un tour des différentes phases d'un cycle d'adsorption, en ce qu'on assure, dans l'adsorbant, une circulation gazeuse dans le sens radial, centripète ou centrifuge, vers des collecteurs à extension longitudinale, l'un situé côté radialement intérieur, l'autre situé côté radialement extérieur par rapport auxdites masses sectorielles d'adsorbant, et en ce qu'on assure aux masses sectorielles une vitesse de rotation continue qui est comprise entre environ 2 et 20 tours/minute.

L'invention vise également un dispositif de séparation par adsorption à variation cyclique de pression d'au moins un constituant gazeux d'un mélange gazeux, comprenant une pluralité d'unités d'adsorption comportant chacune une masse d'adsorbant, et des moyens séquentiels d'alimentation et de soutirage gazeux des différentes unités d'adsorption, pour effectuer un cycle d'adsorption, caractérisé en ce que les unités d'adsorption sont constituées chacune en forme de secteur et disposées dans une structure d'enveloppe tubulaire délimitant, pour chaque unité d'adsorption, un collecteur longitudinal intérieur et un collecteur longitudinal extérieur relié à un collecteur radial d'extrêmité, la structure d'enveloppe tubulaire étant montée en rotation autour d'un axe sur un support stationnaire ayant une surface extérieure coaxiale à l'axe et coopérant en contact sensiblement étanche avec une surface intérieure de la structure d'enveloppe, le support stationnaire définissant un premier et un second jeux de chambres axialement décalés et pourvus respectivement d'une première et d'une seconde séries de passages angulairement répartis débouchant dans la surface extérieure et coopérant sélectivement avec une première et une seconde séries d'ouvertures angulairement réparties débouchant dans la surface intérieure de la structure d'enveloppe tubulaire et communiquant respectivement avec les collecteurs longitudinaux intérieurs et les collecteurs radiaux d'extrêmité des unités d'adsorption, en ce que le nombre de secteurs est supérieur au déroulement, en un tour, des différentes phases du cycle d'adsorption, en ce qu'il comporte des moyens pour entraîner en rotation continue la structure d'enveloppe tubulaire à une vitesse comprise entre environ 2 et 20 tours/minute, et en ce que l'adsorbant a une granulométrie inférieure à 1,7 mm.

L'invention permet ainsi de réaliser simplement toutes sortes de cycles de séparation du plus simple au plus sophistiqué.

De préférence, les différentes chambres sont regroupées en une boîte distributrice cylindrique agencée à l'intérieur de l'arbre-palier-support des compartiments adsorbants sectoriels.

Le cycle ainsi réalisé peut être rendu très complexe et donc performant à l'extrême, il dépend du nombre de compartiments crées : zone d'adsorption, zone d'équilibrage, zone de purge, zone d'élution, zone de recompression, etc... De tels cycles complexes ne pourraient être réalisés selon la technique connue qu'avec un grand nombre de bidons, ce qui alourdit le coût de l'investissement (nombre de vannes, de tuyaux) et accroît l'encombrement.

Des essais préliminaiures ont montré que l'on peut descendre à 9 secondes de durée de cycle avec de l'adsorbant (alumine) en fine granulométrie (inférieure à 1,7 mm), ce qui donne des productivités supérieures à 100Nm³/h/m³ et un rendement supérieur à 30 % en oxygène par séparation d'air.

Enfin, pour éviter les problèmes de pertes de charge, l'épaisseur radiale de l'adsorbant que le gaz traverse dans le sens horizontal est minimale. Des essais ont montré que pour assurer une bonne séparation du mélange gazeux, cette épaisseur radiale d'adsorbant ne doit pas decendre en dessous de 30 cm avec les adsorbants actuels, dans le cas de production d'oxygène.

On note en particulier que la circulation horizontale permet d'augmenter considérablement la vitesse limite d'attrition.

Le procédé de l'invention est parfaitement continu, sans vanne, sans tuyauterie, sans automate, sans régulation.

En outre, ce type d'adsorbeur peut être réalisé en module normalisé : par exemple 10 t/j d'oxygène (soit moins de 3 m³ d'adsorbant pour un diamètre de 2 m et une hauteur de 2 m) et les unités industrielles sont composées de machines (compresseurs, pompe à vide si nécessaire) et du nombre de modules d'adsorption nécessaire à la capacité totale (ex 5 adsorbeurs rotatifs pour 50 T/j).

Cette réalisation modulaire permet un entretien continu du matériel (arrêt de l'un seulement des adsorbeurs) et une souplesse de réglage du débit à produire de 0 à 100 %, notamment par ajustement de la vitesse de rotation, un réglage de la pureté de 22 à 95 %, qui sont actuellement quasi impossibles sur une unité traditionnelle du type à bidons et vannes, où le simple remplacement d'une vanne nécessite l'arrêt total de l'installation, alors que l'obtention d'une souplesse de débit conduit à prévoir une régulation très complexe.

Les caractéristiques et avantages de l'invention ressortiront d'ailleurs de la description qui suit, à titre d'exemple, en référence aux dessins annexés, dans lesquels ;

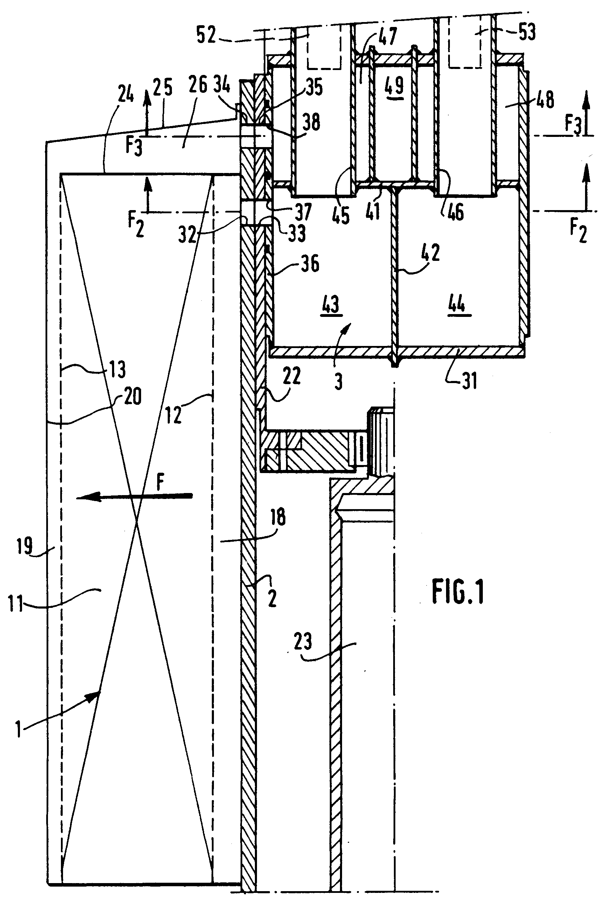

- la figure 1 est une vue en coupe verticale de l'installation de séparation selon l'invention ;
- la figure 2 est une vue en coupe horizontale selon la ligne F₂F₂ de la figure 1 ;
- la figure 3 est une vue en coupe horizontale selon la ligne F₃F₃ de la figure 1.

En se référant aux dessins annexés, une installation selon l'invention comporte une unité d'adsorption 1 montée sur un arbre-support rotatif 2, typiquement vertical, et un ensemble de distribution gazeuse stationnaire 3.

L'unité d'adsorption 1 est constituée d'une pluralité de compartiments sectoriels 11 agencés autour de l'arbre 2 ayant une extension longitudinale dans le sens de la hauteur sur presque toute la portée de l'arbre-support 2 et présentant dans un plan horizontal un contour en forme de secteur trapézoidal, avec des petites bases 12 et de grandes bases 13 inscrites dans des cercles concentriques à l'axe de l'arbre-support 2 et des parois latérales radiales 14 et 15, le tout formant une couronne de compartiments identiques 11 montés solidaires de l'arbre-support 2.

Les compartiments sectoriels 11 sont emplis d'adsorbant 16. Les petites bases 12 et les grandes bases 13 sont réalisées sous forme de panneaux perforés ou grilles, de façon à former des fenêtres de passage de gaz, tandis que les parois latérales pleines 14 et 15 s'étendent radialement vers l'arbre-support 2 et radialement vers l'extérieur au-delà des bases 12 et 13, de façon à former, pour chaque compartiment sectoriel 11, un premier collecteur de gaz 18 avec la paroi externe de l'arbre-support 2, côté radialement intérieur, et un second collecteur 19 avec une paroi externe 20, côté radialement extérieur.

Dans la forme de réalisation représentée aux dessins, l'extension angulaire d'un compartiment 11 est de 15°, de sorte qu'on dispose de 24 compartiments sectoriels 11 tout autour de l'arbre-support 2.

L'arbre-support 2 est un arbre creux qui est fixé sur un palier interne lui-même creux 22, monté à rotation en bout d'un pivot vertical 23. Le mouvement de rotation continu de l'arbre-support 2 autour du pivot 23 est assuré par moteur électrique et engrenages, de façon non décrite.

L'ensemble de distribution gazeuse 3 est formé d'une boîte cylindrique fixe 31 montée à coulissement étanche à l'intérieur du palier creux 22, l'extrémité haute du palier 22 et de l'arbre-support 2 faisant saillie au dessus de la paroi d'extrémité haute 24 des compartiments sectoriels 11.

Les parois latérales 14, 15 des différents compartiments sectoriels 11 se prolongent également vers le haut, ainsi que une paroi externe 20 pour former avec une paroi annnulaire substantiellement radiale 25 autant de conduits substantiellement radiaux 26 qu'il y a de compartiments sectoriels 11, chacun communiquant avec un collecteur externe 19 associé à un compartiment sectoriel 11.

Les collecteurs intérieurs 18 communiquent avec la boîte 31 par des perforations alignées 32 de l'arbre 2 et 33 du palier 22, chacune en nombre égal à celui du nombre de compartiments sectoriels 11 (24 au dessin). De même les collecteurs extérieurs 19 communiquent avec la boîte 31, via les conduits radiaux 26, par une seconde série de perforations alignées 34 de l'arbre 2 et 35 du palier 22, également en nombre égal à celui du nombre de compartiment sectoriels 11.

La boîte 31 présente, au travers de sa paroi latérale cylindrique 36 une double série de perforations 37, 38 dont l'écart angulaire est le même, ou un multiple, de l'écart angulaire des perforations (32-33) et (34-35), et situées aux mêmes niveaux respectifs.

La boîte cylindrique 31 est elle-même subdivisée en plusieurs chambres, d'une part par une paroi transversale (horizontale) 41 s'étendant à un niveau intermédiaire entre les perforations (32-33-37) d'une part et (34-35-38), d'autre part et, en dessous de la paroi horizontale 41, par une paroi verticale médiane 42. On comprend qu'au cours de la rotation simultanée de l'arbre-support 2 et du palier 22, les perforations 37 des deux chambrages 43 et 44 définis par les parois 41 et 42 se présentent successivement en regard des différentes perforations simultanément mobiles en rotation 32 et 33. Le chambrage 43 est raccordé par une tubulure 45 à une source de mélange gazeux à traiter, tandis que le chambrage 44 est raccordé par une tubulure 46 pour gaz résiduaires à évacuer.

La partie haute de la boîte 31, au niveau des perforations mobiles 34 et 35 et des perforations de boîtes 38 est elle-même subdivisée en trois chambrages 47, 48, 49 par deux parois 50 et 51 s'étendant longitudinalement de part et d'autre d'un plan médian axial.

Le chambrage 47 à l'aplomb du chambrage 43 est raccordé vers l'extérieur par une tubulure d'évacuation de gaz de production 52, tandis que la chambre 48 est raccordée par une tubulure 53 à une réserve de gaz de production, alors que le chambrage 49 est un chambrage d'équilibrage formé sans communication vers l'extérieur autre que les perforations hautes 38.

Le fonctionnement de l'installation est le suivant :

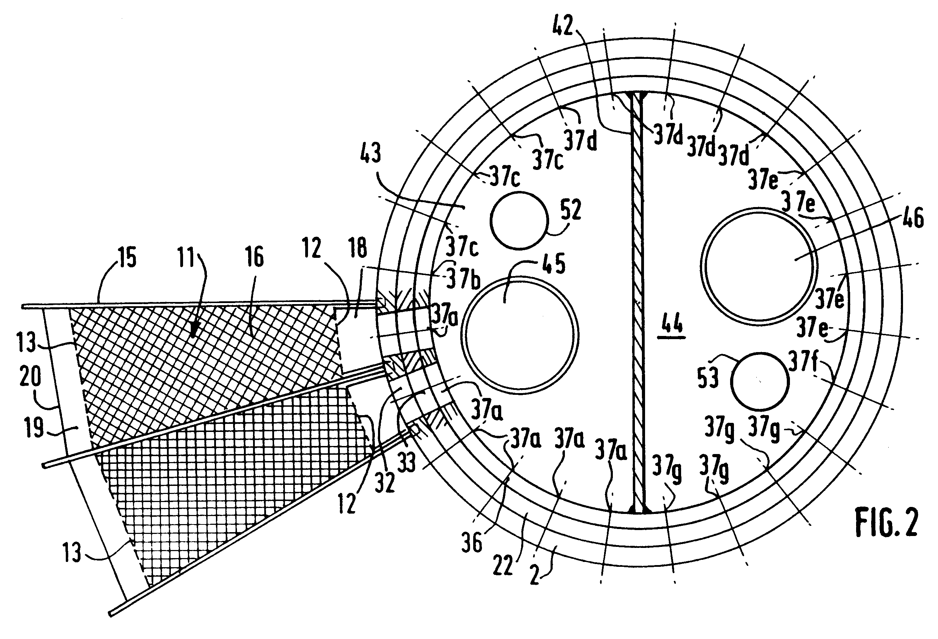

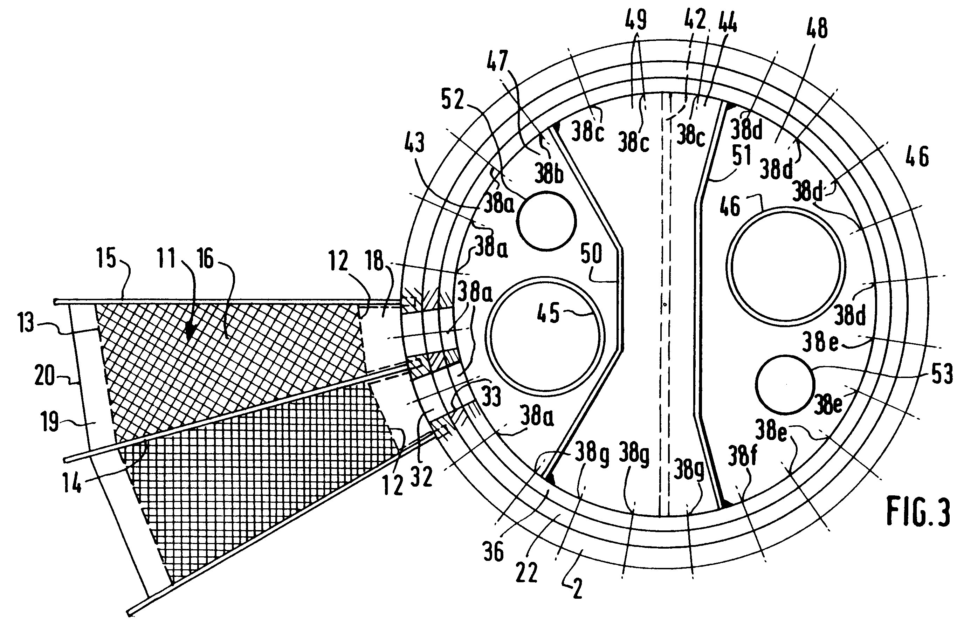

Au cours de la rotation de l'ensemble mobile constitué par le palier 22, l'arbre-support 2 et les différents compartiments sectoriels 11, on rencontre, pour un compartiment 11 les phases suivantes :
a) une phase de production sous pression, lorsque les perforations 32-33 d'une part, 34-35 d'autre part sont en regard des perforations 37, 38 (désignées par 37a : figure 2 et 38a : figure 3) respectivement qui débouchent dans les chambrages 43 et 47 respectivement. Un mélange gazeux à traiter est introduit par la tubulure 45 dans le chambrage 43 et, via les perforations en regard 37 (37a) 33-32, se dirige vers le collecteur de distribution intérieur 18 et de là s'écoule substantiellement horizontalement et radialement vers l'extérieur au travers de la masse d'adsorbant 16 pour déboucher dans le collecteur extérieur 19, puis dans les conduits 26 vers le chambrage de gaz de production 47 via les perforations 34, 35, 38 (38a) et de là s'évacue par la tubulure 52.
   Il y a lieu de noter que cette phase de production intéresse plusieurs compartiments sectoriels 11 simultanément et successivement l'un après l'autre. Ainsi si les chambrages 43 et 47 couvrent extension angulaire incorporant six perforations 37 (37a) du chambrage alimentateur 43 et donc également six perforations 38 (38a) du chambrage évacuateur 47, (sur un total de vingt quatre perforations), on comprend que six compartiments sectoriels 11 sont en permanence simultanément en phase de production, et que lorqu'un compartiment sectoriel 11 s'échappe de la dernière perforation 37 (37a) du chambrage alimentateur 43, donc de la dernière perforation 38 (38a) du chambrage évacuateur 47, un autre compartiment sectoriel 11 parvient à la première perforation 37 (37a) du chambrage alimentateur 43 et donc à la première perforation 38 (38a) du chambrage évacuateur 47.
   Comme le mouvement de rotation de l'ensemble mobile est ici décrit comme le mouvement rotatif continu, il convient que la durée de communication des compartiments sectoriels adsorbants 11 soit maximale. En d'autres termes, on fait en sorte que les durées d'obturation complète entre deux perforations 37a) ou 38a) soient réduites au strict minimum et de préférence annihilée ce qui, ici, pour des perforations circulaires, signifie que l'espace circonférentiel entre deux perforations successives 37, et également deux perforations successives 38, soit le plus faible possible. On peut donc faire en sorte que le diamètre des perforations 37, 38 soit suffisamment grand pour qu'un jeu de perforations constamment alignées (32-33) ou (34-35) de l'ensemble mobile débouche constamment dans le chambrage alimentateur 43, ou évacuateur 47 respectivement, par le fait que pendant une fraction de la durée de rotation qui fait déplacer angulairement un peu de perforations (32-33) (34-35) de la position d'alignement parfait avec une perforation (37) (38) respectivement jusqu'à la position d'alignement parfait avec la perforation suivante (37) (38), il se produise, simultanément à l'obturation progressive de la première perforation (37-38) une ouverture progressive de la perforation qui suit (37) (38).
   Il y a lieu de noter que dans de tels cas, le passage d'une phase opératoire à la suivante, par exemple de la phase de production qui vient d'être décrite à la phase de dépressurisation par équilibrage qui va suivre, implique une obturation transitoire simultanée des passages vers les chambres de production et d'équilibrage et ceci peut être réalisé simplement en obturant un des passages de transition (37) (38) de la chambre distributrice 31, comme indiquée en 37b, 38b aux figures 2 et 3
b) une phase de dépressurisation par équilibrages : lorsque les perforations (34-35) viennent en regard des perforations (38) (désignées par 38c à la figure 3) au niveau de la chambre d'équilibrage 49, alors que les perforations correspondantes 37 (37c) de la chambre 43 sont soit inexistantes, soit obturées dans cette partie angulaire de la chambre d'équilibrage 49 ; du gaz retenu dans l'adsorbant 16 s'évacue alors toujours selon la flèche F, c'est-à-dire horizontalement, radialement vers l'extérieur, c'est-à-dire vers le collecteur 19, le conduit 26, les perforations 34, 35, 38 (38c), la chambre d'équilibrage 49 pour rejoindre, par les perforations 38_{g} et repressuriser partiellement trois compartiments 11 décalés angulairement et qui terminent -après purge- la phase de repressurisation par équilibrage.
   On note qu'il y a autant d'équilibrage(s) successif(s) qu'il y a de chambres d'équilibrage 49 (c'est-à-dire un équilibrage unique au dessin). A titre d'exemple, on peut subdiviser longitudinalement la chambre d'équilibrage 49 en trois chambres individuelles d'équilibrage, faisant correspondre une première dépressurisation par équilibrage avec une dernière repressurisation par équilibrage, une seconde dépressurisation par équilibrage avec une seconde repressurisation par équilibrage, une dernière dépressurisation par équilibrage avec une première repressurisation par équilibrage.
c) une phase de purge, ou dépressurisation à la pression basse, qui s'effectue par les perforations 37 (37d) via le chambrage 44 (les perforations associées 38 (38d) sont alors soient inexistantes, soient obturées), le gaz résiduel s'écoulant alors à contre-courant, c'est-à-dire toujours horizontalement, mais radialement vers l'intérieur, vers le collecteur 18, les perforations 32, 33, 37 (37d), dans la chambre de purge 44, et de là vers la tubulure de résiduaires 46.
d) une phase d'élution, lorsque les perforations 34-35 se présentent en regard des perforations 38 (38e) de la chambre d'élution 48, alors que les perforations 32-33 sont toujours au niveau des perforations 37e de la chambre de purge. Du gaz d'élution - par exemple du gaz de production - s'écoule alors du conduit 53 vers la chambre d'élution 48 et de là vers les conduits 26 et les collecteurs extérieurs 19 pour balayer toujours substantiellement et horizontalement mais radialement vers l'intérieur, c'est-à-dire à contre-courant, l'adsorbant 16, avant d'être évacué par les collecteurs intérieurs 18, les perforations 32, 33, 37, la chambre de purge 44 et la tubulure des résiduaires 46.
e) une phase de repressurisation par équilibrage, qui est celle décrite en référence à la phase b) ci-dessus, les perforations 38g coopérant avec les perforations 38c au travers de la chambre d'équlibrage 49.
f) une phase de repressurisation finale lorsque les perforations 34-35 sont en regard des perforations 38g de la chambre de gaz traité 47, alors que les perforateurs 32-33 sont en regard de perforations inexistantes ou obturées 37g, de sorte que du gaz traité à pression haute de cycle vient repressuriser à contre-courant à cette pression haute un compartiment sectoriel 11 par passage dans la chambre 47, le conduit 26, le collecteur 19.

Les procédé et équipement selon l'invention peuvent être réalisés de façon différente de ce qui vient d'être décrit. Les différentes perforations sur l'unité mobile peuvent être réalisées sous forme d'une pluralité de fentes longitudinales. Par contre, sur le distributeur fixe, les différents passages intéressant une chambre donnée peuvent être réalisés sous forme d'une fente annulaire. De même et bien entendu, le distributeur peut être conçu pour assurer une admission côté radial externe du mélange à traiter et un soutirage radialement intense du gaz de production.

L'ensemble de distribution (distributeur fixe et unité mobile) peut également, pour des étanchéités et un centrage améliorés, avoir une configuration générale conique.

L'invention s'applique à la séparation de l'air pour la production d'oxygène, d'azote et également à la production d'hydrogène, de gaz carbonique et bien d'autres gaz à partir de mélanges les contenant.

## Revendications

1. Procédé de séparation par adsorption d'au moins un constituant gazeux d'un mélange gazeux, du genre où ledit mélange gazeux circule, dans une masse d'adsorbant d'une pluralité de masses d'adsorbant, lors d'un cycle d'adsorption comprenant au moins une phase d'adsorption jusqu'à une pression haute de cycle et une phase de désorption jusqu'à une pression basse de cycle, la pression haute de cycle étant au moins le double de la pression basse de cycle, caractérisé en ce qu'on agence un adsorbant ayant une granulométrie inférieure à 1,7 mm en une pluralité de masses sectorielles (11) angulairement réparties autour d'un axe et en nombre supérieur au déroulement en un tour des différentes phases d'un cycle d'adsorption, en ce qu'on assure, dans l'adsorbant, une circulation gazeuse dans le sens radial, centripète ou centrifuge, vers des collecteurs à extension longitudinale, l'un (18) situé côté radialement intérieur, l'autre (19) situé côté radialement extérieur par rapport auxdites masses sectorielles d'adsorbant, et en ce qu'on assure aux masses sectorielles une vitesse de rotation continue qui est comprise entre environ 2 et 20 tours/minute.

2. Procédé selon la revendication 1, caractérisé en ce qu'on ajuste les paramètres d'obtention du constituant gazeux en ajustant la vitesse de rotation.

3. Procédé selon l'une des revendications 1 et 2, caractérisé en ce que le cycle comprend au moins une phase d'équilibrage entre une masse sectorielle à la pression haute de cycle et une masse sectorielle à la pression basse de cycle.

4. Procédé selon l'une des revendications précédentes, caractérisé en ce que le cycle comprend une phase de repressurisation finale jusqu'à la pression haute de cycle par ledit constituant gazeux séparé du mélange gazeux.

5. Procédé selon l'une des revendications précédentes, caractérisé en ce que le mélange gazeux est essentiellement constitué d'azote et d'oxygène.

6. Procédé selon la revendication 2 et la revendication 5, caractérisé en ce qu'on ajuste la vitesse de rotation pour produire de l'oxygène à une pureté entre 22 et 95 %.

7. Dispositif de séparation par adsorption à variation cyclique de pression d'au moins un constituant gazeux d'un mélange gazeux, comprenant une pluralité d'unités d'adsorption comportant chacune une masse d'adsorbant, et des moyens séquentiels d'alimentation et de soutirage gazeux des différentes unités d'adsorption, pour effectuer un cycle d'adsorption, caractérisé en ce que les unités d'adsorption sont constituées chacune en forme de secteur (11) et disposées dans une structure d'enveloppe tubulaire (2, 20) délimitant, pour chaque unité d'adsorption, un collecteur longitudinal intérieur (18) et un collecteur longitudinal extérieur (19) relié à un collecteur radial d'extrêmité (26), la structure d'enveloppe tubulaire étant montée en rotation autour d'un axe sur un support stationnaire (3) ayant une surface extérieure (36) coaxiale à l'axe et coopérant en contact sensiblement étanche avec une surface intérieure (22) de la structure d'enveloppe, le support stationnaire (3) définissant un premier (4, 43) et un second (47, 48, 49) jeux de chambres axialement décalés et pourvus respectivement d'une première (37) et d'une seconde (38) séries de passages angulairement répartis débouchant dans la surface extérieure et coopérant sélectivement avec une première (32, 33) et une seconde (34, 35) séries d'ouvertures angulairement réparties débouchant dans la surface intérieure de la structure d'enveloppe tubulaire et communiquant respectivement avec les collecteurs longitudinaux intérieurs (18) et les collecteurs radiaux d'extrêmité (26) des unités d'adsorption (11), en ce que le nombre de secteurs (11) est supérieur au déroulement, en un tour, des différentes phases du cycle d'adsorption, en ce qu'il comporte des moyens pour entraîner en rotation continue la structure d'enveloppe tubulaire à une vitesse comprise entre environ 2 et 20 tours/minute, et en ce que l'adsorbant a une granulométrie inférieure à 1,7 mm.

8. Dispositif selon la revendication 7, caractérisé en ce que l'épaisseur radiale d'adsorbant de chaque unité d'adsorption (11) n'est pas inférieure à 30 cm.

9. Utilisation d'un dispositif selon l'une des revendications 7 et 8 pour la production d'oxygène à partir d'air.

## Claims

1. Process for separating at least one gaseous constituent from a gaseous mixture by adsorption, of the type where the said gaseous mixture circulates, within an adsorbent mass of a plurality of adsorbent masses, during an adsorption cycle comprising at least one adsorption phase up to a high cycle pressure and one desorption phase down to a low cycle pressure, the high cycle pressure being at least double the low cycle pressure, characterized in that an adsorbent having a particle size of less than 1.7 mm is arranged in a plurality of sectorial masses (11) distributed angularly about an axis in a number greater than the various phases of an adsorption cycle occurring in one revolution, and in that centripetal or centrifugal gaseous circulation is produced in the adsorbent in the radial direction, towards collectors with a longitudinal extension, one (18) situated on the radially inner side and the other (19) situated on the radially outer side with respect to the said sectorial adsorbent masses, and in that the sectorial masses are provided with a continuous rate of rotation which lies between 2 and 20 revolutions per minute.

2. Process according to claim 1, characterized in that the parameters are adjusted for obtaining the gaseous constituent by adjusting the rate of rotation.

3. Process according to either of claims 1 or 2, characterized in that the cycle includes at least one phase establishing an equilibrium between a sectorial mass at the high cycle pressure and a sectorial mass at the low cycle pressure.

4. Process according to one of the preceding claims, characterized in that the cycle includes a final repressurization phase to the high cycle pressure by the said gaseous constituents separated from the gaseous mixture.

5. Process according to one of the preceding claims, characterized in that the gaseous mixture consists essentially of nitrogen and oxygen.

6. Process according to claim 2 and claim 5, characterized in that the rate of rotation is adjusted to produce oxygen at a purity of between 22 and 95 %.

7. Device for separating at least one gaseous constituent from a gaseous mixture by adsorption with cyclic pressure variation, comprising a plurality of adsorption units each having an adsorbent mass, and sequential means for feeding and withdrawing gases to and from the various adsorption units, to carry out an adsorption cycle, characterized in that the adsorption units are each constituted in a sector form (11) and are arranged in a tubular envelope structure (2,20) delimiting, for each adsorption unit, an inner longitudinal collector (18) and an outer longitudinal collector (19) connected to an end radial collector (26), the tubular envelope structure being mounted in rotation about an axis on a stationary support (3) having an outer surface (36) coaxial with the axis and cooperating in substantially gas-tight contact with an inner surface (22) of the envelope structure, the stationary support (3) defining a first (4,43) and a second (47,48,49) set of axially offset chambers provided respectively with a first (37) and a second (38) series of angularly distributed passages emerging on the outer surface and cooperating selectively with a first (32,33) and a second (34,35) series of angularly distributed openings emerging on the inner surface of the tubular envelope structure and communicating respectively with the inner longitudinal collectors (18) and the end radial collectors (26) of the adsorption units (11), in that the number of sectors (11) is greater than the various phases of an adsorption cycle occurring in one revolution, and in that it includes means for driving the tubular envelope structure continuously in rotation at a rate of between approximately 2 and 20 revolutions per minute, and in that the adsorbent has a particle size of less than 1.7 mm.

8. Device according to claim 7, characterized in that the radial thickness of the adsorbent of each adsorption unit (11) is not less than 30 cm.

9. Use of a device according to either of claims 7 or 8 for the production of oxygen from air.

## Patentansprüche

1. Verfahren zur Abtrennung mindestens eines gasförmigen Bestandteils von einem gasförmigen Gemisch mittels Adsorption, bei dem das gasförmige Gemisch während eines Adsorptionszyklus in eine von zahlreichen Adsorbtionsmittelmassen strömt, wobei der Zyklus mindestens eine Adsorptionsphase bis zu einem Zyklushochdruck und eine Desorptionsphase bis zu einem Zyklusniederdruck umfaßt und der Zyklushochdruck mindestens doppelt so hoch wie der Zyklusniederdruck ist, **dadurch gekennzeichnet**, daß ein Adsorptionsmittel mit einer Korngröße kleiner 1,7 mm in einer Vielzahl von sektoriellen Massen rings um eine Achse angeordnet wird, wobei die Zahl der Massen größer ist als die Anzahl der unterschiedlichen Phasen eines Adsorptionszyklus, die je Umdrehung durchlaufen werden, daß in dem Adsorber ein radialer, zentripetaler oder zentrifugaler Gasfluß in Richtung auf längsgestreckte Kollektoren, von denen einer (18) radial innenseitig, der andere (19) radial außenseitig von den sektoriellen Adsorptionsmittelmassen angeordnet ist, erzeugt wird, und daß den sektoriellen Massen eine gleichbleibende Drehgeschwindigkeit erteilt wird, die zwischen ungefähr 2 und 20 U/min liegt.

2. Verfahren nach Anspruch 1, dadurch gekennzeichnet, daß die Darstellungsparameter für den gasförmigen Bestandteil durch Einstellen der Drehzahl eingestellt werden.

3. Verfahren nach einem der Ansprüche 1 oder 2, dadurch gekennzeichnet, daß der Zyklus mindestens eine Phase zur Einstellung des Gleichgewichts zwischen einer unter dem Zyklushochdruck stehenden sektoriellen Masse und einer unter dem Zyklusniederdruck stehenden sektoriellen Masse umfaßt.

4. Verfahren nach einem der vorstehenden Ansprüche, dadurch gekennzeichnet, daß der Zyklus eine Phase des abschließenden, erneuten Unterdrucksetzens bis auf den Zyklushochdruck mittels des abgeschiedenen, gasförmigen Bestandteils des gasförmigen Gemisches umfaßt.

5. Verfahren nach einem der vorstehenden Ansprüche, dadurch gekennzeichnet, daß das gasförmige Gemisch im wesentlichen aus Stickstoff und Sauerstoff besteht.

6. Verfahren nach Anspruch 2 und Anspruch 5, dadurch gekennzeichnet, daß die Drehzahl auf das Herstellen von Sauerstoff mit einer Reinheit zwischen 22 % und 95 % eingestellt wird.

7. Vorrichtung zur Abtrennung mindestens eines gasförmigen Bestandteils aus einem gasförmigen Gemisch mittels Adsorption bei zyklischer Druckänderung, umfassend eine Vielzahl von Adsorptionseinheiten, die jeweils eine Adsorptionsmittelmasse enthalten, und Mittel zur aufeinanderfolgenden Speisung und zur Entnahme von Gas aus verschiedenen Adsorptionseinheiten, um einen Adsorptionszyklus zu durchlaufen, dadurch gekennzeichnet, daß die Adsorptionseinheiten jeweils als Kreissektoren (11) ausgebildet und in einer rohrförmigen Gehäusekonstruktion (2, 20) angeordnet sind, die je Adsorptionseinheit einen inneren, längsgestreckten Kollektor (18) und einen äußeren, längsgestreckten Kollektor (19), der mit einem radial angeordneten Endkollektor (26) verbunden ist, begrenzt, wobei die rohrförmige Gehäusekonstruktion um eine Achse drehbar auf einem stationären Träger (3) mit einer koaxial zu der Achse angeordneten Außenfläche (36) angeordnet ist, der im wesentlichen dichtend mit einer Innenfläche (22) der Gehäusekonstruktion zusammenwirkt und der stationäre Träger (3) eine erste (4, 34) und eine zweite (47, 48, 49) Gruppe von Kammern hat, die axial versetzt sind und jeweils mit einer ersten (37) und einer zweiten (38) Reihe von rings um die Achse verteilten Kanälen versehen sind, die in die Außenfläche münden und selektiv mit einer ersten (32, 33) und einer zweiten (34, 35) Reihe von rings um die Achse verteilten Öffnungen zusammenwirken, die in die Innenfläche der rohrförmigen Gehäusekonstruktion münden und mit den inneren, längsgestreckten Kollektoren (18) bzw. den radial angeordneten Endkollektoren (26) der Adsorptionseinheiten (11) verbunden sind, daß die Anzahl der Kreissektoren (11) großer als die Zahl unterschiedlicher Phasen des Adsorptionszyklusses je Umlauf ist, daß sie Mittel zur gleichförmigen Drehung der rohrfömigen Gehäusekonstruktion mit einer Drehzahl zwischen ungefähr 2 und 20 U/min umfaßt, und daß das Adsorptionsmittel eine Korngröße kleiner 1,7 mm hat.

8. Vorrichtung nach Anspruch 7, dadurch gekennzeichnet, daß die radiale Dicke des Adsorptionsmittels jeder Adsorptionseinheit (11) nicht kleiner als 30 cm ist.

9. Verwendung einer Vorrichtung nach einem der Ansprüche 7 und 8 zur Herstellung von Sauerstoff aus Luft.
